# EUROPÄISCHE PATENTANMELDUNG

(11) **EP 4 226 754 A1**
(43) Veröffentlichungstag der Anmeldung: **16.08.2023**
(21) Anmeldenummer: 23151278.1
(22) Anmeldetag: 12.01.2023
(51) Int. Cl.: A01C 7/12, A01C 7/08

(54) **VERTEILMASCHINE MIT EINEM DOSIERORGAN UND DOSIERORGAN FÜR EINE SOLCHE VERTEILMASCHINE**

(30) Priorität: 09.02.2022 DE 202022100740 U
(71) Anmelder: RAUCH Landmaschinenfabrik GmbH, 76547 Sinzheim (DE)
(72) Erfinder: Zimmer, Maximilian, 76534 Baden-Baden (DE); Stöcklin, Volker, 77975 Ringsheim (DE)
(74) Vertreter: Lichti - Patentanwälte Partnerschaft mbB

(57) **Zusammenfassung**

Es wird eine Verteilmaschine zum Ausbringen von Verteilgut, wie Dünger oder Saatgut, mit einem Dosierorgan (100) mit einer in einem Dosiergehäuse (102, 103) gelagerten, um eine Drehachse rotierbar angetriebenen Dosierwalze (101, 110) zur Dosierung des Verteilgutes vorgeschlagen. Das Dosiergehäuse (102, 103) weist einen Dosiereinlass (103) und einen - in Rotationsrichtung der Dosierwalze (101, 110) betrachtet - stromab des Dosiereinlasses (103) angeordneten Dosierauslass (105) auf. Die Erfindung sieht vor, dass das Dosiergehäuse (102, 103) zwischen seinem Dosiereinlass (103) und seinem Dosierauslass (105) eine Mehrzahl an in Axialrichtung der Dosierwalze (101, 110) nebeneinander angeordneten Dosierklappen (120) mit einer zum Außenumfang der Dosierwalze (101, 110) zumindest abschnittsweise komplementären Form aufweist, wobei die Dosierklappen (120) unabhängig voneinander um eine gemeinsame, parallel zur Drehachse der Dosierwalze (101, 110) angeordnete Schwenkachse zwischen einer Betriebsposition, in welcher sie mit der Dosierwalze (101, 110) zusammenwirken, und einer Ausweichposition, in welcher sie mit Abstand von der Dosierwalze (101, 110) angeordnet sind, verschwenkbar sind, wobei die Dosierklappen (120) in Richtung ihrer Betriebsposition mechanisch vorbelastet sind.

## Beschreibung

Die Erfindung betrifft eine Verteilmaschine zum Ausbringen von Verteilgut, insbesondere Dünger und/oder Saatgut, mit wenigstens einem Dosierorgan mit einer in einem Dosiergehäuse gelagerten, um eine Drehachse rotierbar angetriebenen Dosierwalze zur Dosierung des Verteilgutes, wobei das Dosiergehäuse einen Dosiereinlass und einen - in Rotationsrichtung der Dosierwalze betrachtet - stromab des Dosiereinlasses angeordneten Dosierauslass aufweist.

Die Erfindung bezieht sich ferner auf ein insbesondere für eine solche Verteilmaschine geeignetes Dosierorgan mit einer in einem Dosiergehäuse gelagerten, um eine Drehachse rotierbar angetriebenen Dosierwalze, wobei das Dosiergehäuse einen Dosiereinlass und einen - in Rotationsrichtung der Dosierwalze betrachtet - stromab des Dosiereinlasses angeordneten Dosierauslass aufweist.

Derartige Verteilmaschinen finden vornehmlich in der Landwirtschaft, insbesondere in Form von Düngerstreuern und/oder Sämaschinen, zum Ausbringen von pulver- bzw. partikelförmigem Verteilgut, wie Dünger, Saatgut und dergleichen, in vielfältiger Ausgestaltung Verwendung und umfassen üblicherweise einen Vorratsbehälter zur Aufnahme des Verteilgutes, unterhalb dessen das oder die Dosierorgan(e) angeordnet ist bzw. sind. Während als Dosierorgane häufig auch mit einer Auslauföffnung des Vorratsbehälters zusammenwirkende, aktuatorisch oder manuell betätigte Dosierschieber zum Einsatz gelangen, weist das Dosierorgan bei den hier in Frage stehenden Verteilmaschinen eine um eine Drehachse rotierbar angetriebene Dosierwalze auf, welche z.B. in Form einer Zellenrad- und/oder Nockenradwalze ausgestaltet sein kann. Die Dosierwalze ist in einem Dosiergehäuse gelagert, welches üblicherweise einen im Bereich seiner Oberseite angeordneten, beispielsweise mit dem Vorratsbehälter in Verbindung stehenden Dosiereinlass und einen im Bereich seiner Unterseite angeordneten Dosierauslass aufweist. Ein solches Dosierorgan ist beispielsweise aus der EP 2 786 649 A2 bekannt.

Landwirtschaftliche Verteilmaschinen, welche von derartigen Dosierorganen Gebrauch machen, können im einfachsten Fall beispielsweise von sogenannten Kastenstreuern bzw. Kastensämaschinen gebildet sein, bei welchen das in einem Vorratsbehälter auf Vorrat gehaltene und mittels der Dosierwalze des Dosierorgans dosierte Verteilgut rein aufgrund Schwerkraft entweder über eine oder mehrere, z.B. am Ende von sich bis oberhalb des Bodens erstreckenden Schläuchen vorgesehenen Ablageöffnungen auf die Oberfläche des Bodens ausgebracht oder, z.B. mittels geeigneter Injektionseinrichtungen, Säzinken, Säscharen und dergleichen, in den Boden eingebracht wird. Solche Kastenstreuer bzw. Kastensämaschinen, welche in der Regel als Nachläufer oder als Anbaugeräte für Zugmaschinen, wie Traktoren, konzipiert sind, dienen vornehmlich zum Ausbringen des Verteilgutes entlang relativ schmaler Flächen, wie beispielsweise im Gemüseanbau zum Verteilen von Dünger auf verhältnismäßig schmalen Beetflächen. Ihre Arbeitsbreite, welche weitestgehend der Streubreite entspricht, beträgt oft in der Größenordnung von beispielsweise etwa 80 cm bis etwa 3 m. Sofern das Verteilgut nur auf eine Teilbreite ausgebracht werden soll, wie es z.B. beim Ausbringen des Verteilgutes an einem Feld- oder Beetrand erforderlich sein kann, können die nicht benötigten Axialabschnitte der Dosierwalze, welche je nach dem auszubringenden Verteilgut z.B. als Zellenrad- oder Nockenwalze ausgestaltet und vorteilhafterweise entweder gänzlich austauschbar oder aus einzelnen, gegeneinander austauschbaren Zellenrad- oder Nockenradsegmenten zusammengesetzt sein kann (vgl. z.B. die oben zitierte EP 2 786 649 B1), mit die Zellenradkammern bzw. die Nockentäler überdeckenden Blindringen versehen werden, was sich jedoch in handhabungstechnischer Hinsicht als relativ aufwändig erweisen kann.

Ferner finden Dosierorgane mit einer in einem Dosiergehäuse gelagerten, um eine Drehachse rotierbar angetriebenen Dosierwalze der eingangs genannten Art insbesondere in pneumatischen Verteilmaschinen Verwendung, welche gleichfalls als pneumatische Düngerstreuer und/oder pneumatische Sämaschinen ausgestaltet sein können. Pneumatische Verteilmaschinen können gleichfalls einerseits in leichter Bauart als Anbaugeräte verwirklicht sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise eine Mehrzahl an seitlich nach außen ragenden Auslegern, welche in unterschiedlichem Abstand voneinander endende Förderleitungen aufnehmen. Zur Förderung des Verteilgutes dient ein Gebläse, dessen Druckleitung sich an den Dosierauslass des Dosiergehäuses eines jeweiligen Dosierorgans anschließt und in einen Druckverteiler mündet, an welchen sich die Förderleitungen anschließen. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von der Dosierwalze des Dosierorgans an die Förderleitungen, um sicherzustellen, dass jeder Förderleitung dieselbe Menge an Verteilgut aufgegeben wird. Das Verteilgut wird schließlich pneumatisch über die nach außen umgelenkten Förderleitungen bis zu deren Ende gefördert, wo das Streugut an entsprechende Verteilorgane überführt wird.

Je nach Ausgestaltung der Verteilmaschine bzw. je nach Art des auszubringenden Verteilgutes können die Verteilorgane im einfachsten Fall z.B. Ablageöffnungen aufweisen, aus welchen das Verteilgut infolge Schwerkraft mehr oder minder linienförmig auf der Oberfläche des Bodens ausgebracht wird, wie es beispielsweise für die Reihendüngung erwünscht sein kann. Die Ablageöffnungen können dabei z.B. unmittelbar unterhalb des Dosierorgans oder auch am Ende von Schlauchleitungen vorgesehen sein, welche sich stromab des Dosierorgans bis unmittelbar oberhalb des Bodens erstrecken, damit das Verteilgut keinen Windeinflüssen unterliegt, wenn es zu Boden fällt. Ferner können insbesondere im Falle von pneumatischen Verteilmaschinen der oben genannten Art als Verteilorgane Prallorgane, wie Prallteller bzw. Prallplatten, vorgesehen sein, auf welche das in einer jeweiligen Förderleitung pneumatisch transportierte Verteilgut auftrifft und von dort im Wesentlichen fächerförmig auf dem Boden abgelegt wird. Andersartige Verteilorgane, wie sie insbesondere zur Verteilung von Saatgut, aber auch für die Tiefendüngung zum Einsatz gelangen, umfassen Injektionseinrichtungen zum Einbringen des Verteilgutes in den Boden, wie sie beispielsweise aus der WO 2015/120982 A1 bekannt sind, um das Verteilgut in eine Bodenfurche einzubringen und die Bodenfurche vorzugsweise mittels nachgeordneter Schlitzverschlusseinrichtungen, wie sogenannten Striegeln oder dergleichen, wieder zu verschließen. Darüber hinaus sind als Verteilorgane auch Säscharen oder Säzinken geläufig, welche gleichfalls einen Schlitz in dem Boden erzeugen, in welchen das Verteilgut abgelegt werden kann.

Eine derartige pneumatische Verteilmaschine ist in Form eines pneumatischen Düngerstreuers beispielsweise aus der DE 10 2004 030 240 A1 bekannt, welche hiermit zum Gegenstand der vorliegenden Offenbarung gemacht wird. Die bekannte pneumatische Verteilmaschine weist dabei eine Mehrzahl an Dosierorganen auf, welche jeweils eine drehangetriebene Dosierwalze umfassen, an deren Dosiergehäuse sich auslassseitig wiederum mehrere, mittels Gebläse druckbeaufschlagte Übergabekammern anschließen, von welchen gruppenweise mehrere Förderleitungen abgehen, welche in je einem Verteilorgan münden. Eine Teilbreitenschaltung ist dadurch gewährleistet, dass jedem Dosierorgan ein eigener, unabhängig voneinander drehzahlgesteuerter Motor zum Antrieb seiner jeweiligen Dosierwalze zugeordnet ist, so dass nebeneinander angeordnete Verteilorgane, welche von den jeweiligen Gruppen an Förderleitungen mit Verteilgut versorgt sind, die von einem jeweiligen Dosierorgan ausgehen, gruppenweise zu- bzw. abgeschaltet werden können. Ferner lassen sich durch sukzessives Einschalten bzw. Ausschalten der Dosierorgane derart, dass zunächst die mit den äußeren Verteilorganen in Verbindung stehenden Dosierorgane eingeschaltet werden und sodann erst die weiter inneren bzw. dass zunächst die mit den inneren Verteilorganen in Verbindung stehenden Dosierorgane abgeschaltet werden und sodann erst die weiter äußeren, die zum pneumatischen Transport des Verteilgutes durch die verschieden langen Förderleitungen erforderlichen unterschiedlichen Transportzeiten kompensieren, so dass der Verteilvorgang am Anfang des Feldes gleichmäßig begonnen bzw. am Ende des Feldes gleichmäßig beendet werden kann. Darüber hinaus ist es durch Antrieb der Dosierwalzen der Dosierorgane mit unterschiedlichen Rotationsgeschwindigkeiten auch möglich, verschiedenen Feldbereichen mit unterschiedlichem Versorgungsbedarf an Verteilgut innerhalb der gesamten Arbeitsbreite Rechnung zu tragen oder bei der Kurvenfahrt andernfalls im Kurveninneren entstehende Überversorgungen bzw. im Kurvenäußeren entstehende Unterversorgungen zu kompensieren.

Die WO 2018/219489 A1, welche hiermit gleichfalls zum Gegenstand der vorliegenden Offenbarung gemacht wird, beschreibt eine ähnliche Verteilmaschine, bei welcher die Dosierorgane in vorteilhafter Weise dahingehend weiterentwickelt worden sind, dass nicht nur eine relativ grobe, sondern eine sehr feine Teilbreitenschaltung realisierbar ist, bei welcher praktisch jedes Verteilorgan unabhängig voneinander mit einem gewünschten, individuellen Massenstrom an Verteilgut versorgt werden kann. Zu diesem Zweck umfasst die Dosierwalze des Dosierorgans eine Mehrzahl an Dosierradsegmenten, welche unabhängig voneinander gesteuert und/oder geregelt rotationsangetrieben sind. Die Dosierradsegmente der Dosierwalze sind dabei, z.B. mittels Gleit- oder Wälzlagern, auf einem sich koaxial zu deren Drehachse erstreckenden, im Wesentlichen rohrförmigen Hohlkörper gelagert, wobei eine Mehrzahl an im Innern des Hohlkörpers festgelegten und einem jeweiligen Dosierradsegment zugeordneten Antrieben vorgesehen ist. Die Antriebe besitzen abtriebsseitig jeweils ein einem jeweiligen Dosierradsegment zugeordnetes Zahnrad, wobei der Hohlkörper zumindest an seinem einem jeweiligen Zahnrad zugeordneten Axialabschnitt eine Durchgangsöffnung aufweist, so dass ein jeweiliges Zahnrad mit einer jeweiligen Innenverzahnung eines jeweiligen Dosierradsegmentes im Eingriff steht, um dieses individuell in Rotation zu versetzen. Es ergibt sich folglich eine sehr feine Unterteilung an möglichen Teilbreiten, wobei ein jedes Dosierradsegment eine Teilbreite der gesamten Arbeitsbreite, z.B. jeweils ein einziges oder Gruppen von Verteilorganen, der Verteilmaschine zu versorgen vermag.

Ein Nachteil von gattungsgemäßen Dosierorganen mit einer um eine Drehachse rotierbar angetriebenen Dosierwalze, sei sie im Wesentlichen einteilig oder sei sie aus einer Mehrzahl an einzelnen Dosierradsegmenten gebildet, besteht indes grundsätzlich darin, dass das Dosierorgan insbesondere im Falle von relativ scharfkantigen, abrasiven Verteilgutpartikeln, wie z.B. Düngerkörnern einschließlich hierin häufig enthaltener Verunreinigungen, wie Sand, Erdklumpen oder kleineren Steinen, einem hohen Verschleiß unterworfen ist, wenn die mittels der rotierenden Dosierwalze von dem Dosiereinlass zu dem Dosierauslass entlang der Dosiergehäusewandung transportierten Verteilgutpartikel dosiert werden. Dies umso mehr, wenn die Verteilgutpartikel, z.B. aufgrund einer hohen Hygroskopizität, zur Verklumpung neigen, wie dies beispielsweise bei vielen Düngersorten der Fall ist. Dies führt darüber hinaus insbesondere bei Inbetriebnahme des Dosierorgans zu einer sehr großen, auf den Antrieb der Dosierwalze wirkenden Last, so dass der Antrieb der Dosierwalze mit einer hohen Leistung dimensioniert sein muss, andernfalls die Gefahr einer Beschädigung besteht. Bei gegenüber mechanischer Einwirkung relativ empfindlichen Verteilgütern, wie z.B. Saatgut, kommt hinzu, dass auf die Verteilgutpartikel während des Dosierens hohe Druck- und Scherkräfte wirken, so dass zumindest ein Teil des dosierten Verteilgutes Gefahr läuft beschädigt zu werden.

In der Praxis versucht man diesen Problemen teils dadurch zu begegnen, dass der Abschnitt des mit der Dosierwalze zusammenwirkenden Dosiergehäuses, welcher sich - in Rotationsrichtung der Dosierwalze betrachtet - zwischen dem Dosiereinlass und dem Dosierauslass befindet, mit einer gewissen elastischen Nachgiebigkeit, z.B. in Form eines dünnen Bleches, ausgebildet wird, doch ergeben sich auf hier hohe mechanische Belastungen auf die Dosierwalze sowie insbesondere auf deren Antrieb und nicht zuletzt auch auf die Verteilgutpartikel, wobei ferner insbesondere eine temporärer Überdosierung nicht vermieden werden kann, wenn der nachgiebig elastische Abschnitt des Dosiergehäuses z.B. bei der Dosierung von verklumpten Verteilgutagglomeraten oder Verunreinigungen der oben genannten Art von der Dosierwalze fort nach außen gebogen wird.

Der Erfindung liegt die Aufgabe zugrunde, eine Verteilmaschine zum Ausbringen von Verteilgut der eingangs genannten Art sowie ein insbesondere für eine solche Verteilmaschine geeignetes Dosierorgan mit einer in einem Dosiergehäuse gelagerten, rotierbar angetriebenen Dosierwalze unter zumindest weitestgehender Vermeidung der vorgenannten Nachteile auf einfache und kostengünstige Weise dahingehend weiterzubilden, dass unter Gewährleistung einer hohen Betriebssicherheit sowie insbesondere eine hohen Dosiergenauigkeit eine Beschädigung sowohl des Dosierorgans als auch der Verteilgutpartikel infolge hierauf wirkender, übermäßiger Kräfte zumindest weitgehend vermieden wird.

Erfindungsgemäß wird diese Aufgabe bei einer Verteilmaschine sowie bei einem Dosierorgan der eingangs genannten Art dadurch gelöst, dass das Dosiergehäuse zwischen seinem Dosiereinlass und seinem Dosierauslass eine Mehrzahl an in Axialrichtung der Dosierwalze nebeneinander angeordneten Dosierklappen mit einer zum Außenumfang der Dosierwalze zumindest abschnittsweise komplementären Form aufweist, wobei die Dosierklappen unabhängig voneinander um eine gemeinsame, parallel zur Drehachse der Dosierwalze angeordnete Schwenkachse zwischen einer Betriebsposition, in welcher sie mit der Dosierwalze zusammenwirken, und einer Ausweichposition, in welcher sie mit Abstand von der Dosierwalze angeordnet sind, verschwenkbar sind, wobei die Dosierklappen in Richtung ihrer Betriebsposition mechanisch vorbelastet sind.

Die erfindungsgemäße Ausgestaltung sieht demnach vor, dass der Wandungsabschnitt des Dosiergehäuses, welcher sich - in Rotationsrichtung der Dosierwalze betrachtet - im Wesentlichen von dem Dosiereinlass bis zu dem Dosierauslass erstreckt, von einer Mehrzahl an in Axialrichtung der Dosierwalze nebeneinander angeordneten Dosierklappen mit einer zum Außenumfang der Dosierwalze zumindest abschnittsweise komplementären Form gebildet ist, welche jeweils unabhängig voneinander um eine gemeinsame, parallel zur Drehachse der Dosierwalze angeordnete Schwenkachse zwischen einer Betriebsposition, in welcher die Dosierklappen mit der Dosierwalze zusammenwirken, und einer Ausweichposition, in welcher die Dosierklappen mit Abstand von der Dosierwalze angeordnet sind, verschwenkbar sind, so dass eine jeweilige Dosierklappe an demjenigen Axialabschnitt der Dosierwalze, an welcher z.B. eine verklumpte Verteilgutaggregation, eine Verunreinigung des Verteilgutes oder dergleichen gerade von der Dosierwalze aufgenommen worden ist, lokal von der Dosierwalze zurückzuweichen vermag, indem die jeweilige Dosierklappe entgegen ihrer mechanischen Vorbelastung aus ihrer Betriebsposition in ihre Ausweichposition verschwenkt wird. Hierdurch wird einerseits der Verschleiß sowohl der Dosierwalze als auch des Dosiergehäuses in erheblicher Weise verringert, andererseits wird eine übermäßige Belastung des Antriebs der Dosierwalze auf diese Weise ebenso zuverlässig vermieden wie eine mechanische Beschädigung des Verteilgutes. Aufgrund der erfindungsgemäß vorgesehenen Mehrzahl an Dosierklappen kommt es im Falle des Verschwenkens einer oder mehrerer Dosierklappen aus ihrer Betriebsposition in ihre Ausweichposition ferner insbesondere nur zu allenfalls sehr geringen temporären, lokalen Überdosierungen, da die übrigen Dosierklappen in ihrer Betriebsposition verbleiben und lediglich an demjenigen Axialabschnitt der Dosierwalze, an welchem die ihm zugeordnete Dosierklappe gerade in ihrer Ausweichposition verschwenkt worden ist, aufgrund des dann vergrößerten Dosierspaltes temporär ein etwas größerer Massenstrom an Verteilgut dosiert wird. Sobald der Verteilgutklumpen, die Verunreinigung oder dergleichen durch Rotieren der Dosierwalze den Dosierauslass erreicht hat, wird die jeweilige Dosierklappe infolge ihrer mechanischen Vorbelastung selbsttätig wieder in die Betriebsposition verschwenkt, so dass der durch die Drehzahl der Dosierwalze eingestellte Soll-Massenstrom an Verteilgut wieder exakt erreicht wird.

Die mechanische Vorbelastung einer jeweiligen Dosierklappe in ihre Betriebsposition ist vorzugsweise elastisch, so dass eine jede Dosierklappe, nachdem sie - z.B. zum Durchlass einer Verteilgutpartikelaggregation, einer Verunreinigung des Verteilgutes oder dergleichen - in ihre Ausweichposition verschwenkt worden ist, selbsttätig wieder in ihre Betriebsposition zurück verschwenkt wird. Zu einer solchen mechanisch elastischen Vorbelastung einer jeweiligen Dosierklappe in ihre Betriebsposition kann insbesondere vorgesehen sein, dass einer jeweiligen Dosierklappe wenigstens eine Feder zugeordnet ist, wobei es sich bei der Feder grundsätzlich um beliebige mechanische oder fluidische Federn, wie beispielsweise Schraubenfedern, handeln kann.

Die Dosierwalze des erfindungsgemäßen Dosierorgans kann beispielsweise einteilig ausgestaltet sein oder eine Mehrzahl an gemeinsam rotationsangetriebenen Dosierradsegmenten umfassen, wie es z.B. aus der eingangs zitierten DE 10 2004 030 240 A1 bekannt, wobei die Mehrzahl an Dosierklappen über die axiale Länge des Dosierrades verteilt angeordnet ist, so dass eine jeweilige Dosierklappe an demjenigen Axialabschnitt der Dosierwalze aus ihrer Betriebsposition in ihre Ausweichposition verschwenkt werden kann, an welchem z.B. gerade eine Verklumpung des Verteilgutes auftritt. Darüber hinaus bietet sich die erfindungsgemäße Ausgestaltung in besonderer Weise auch für solche Dosierorgane an, deren Dosierwalze eine Mehrzahl an Dosierradsegmenten aufweist, welche unabhängig voneinander rotierbar angetrieben sind (vgl. insbesondere auch die eingangs zitierte WO 2018/219489 A1), wobei insbesondere einem jeden Dosierradsegment oder Gruppen von Dosierradsegmenten je eine Dosierklappe zugeordnet sein kann. Tritt folglich an einem jeweiligen Dosierradsegment einer solchen Dosierwalze z.B. eine Verklumpung des Verteilgutes auf, so vermag die ihm zugeordnete Dosierklappe individuell von ihrer Betriebsposition in ihre Ausweichposition zu schwenken, bis der Klumpen den Dosierauslass erreicht hat, während die Dosierklappen der übrigen Dosierradsegmente in ihrer Betriebsposition verbleiben.

Wie als solches aus der vorgenannten WO 2018/219489 A1 bekannt, kann dabei in vorteilhafter Ausgestaltung vorgesehen sein, dass die Dosierradsegmente der Dosierwalze auf einem sich koaxial zu deren Drehachse erstreckenden Hohlkörper gelagert sind, in dessen Innern ein einem jeweiligen Dosierradsegment zugeordneter, z.B. elektrischer oder auch hydraulischer, Antrieb angeordnet ist, wobei die Antriebe ein einem jeweiligen Dosierradsegment zugeordnetes Zahnrad aufweisen und der Hohlkörper zumindest an seinem einem jeweiligen Zahnrad zugeordneten Axialabschnitt eine Durchgangsöffnung aufweist, wobei ein jeweiliges Zahnrad eines jeweiligen Antriebs mit einer jeweiligen Innenverzahnung eines jeweiligen Dosierradsegmentes im Eingriff steht.

In diesem Fall hat es sich als vorteilhaft erwiesen, wenn der die Dosierradsegmente der Dosierwalze lagernde Hohlkörper eine Zentriereinrichtung aufweist, welche mit einer hierzu komplementären Zentriereinrichtung des Dosiergehäuses, z.B. an zumindest einer der den Hohlkörper aufnehmenden Stirnwände des Dosiergehäuses, zusammenwirkt, um den Hohlkörper in einer fest vorgegebenen Montageposition, in welcher die Durchgangsöffnungen des Hohlkörpers im Wesentlichen nach unten weisen, selbstzentrierend an dem Dosiergehäuse festzulegen. Auf diese Weise ist sichergestellt, dass der Hohlkörper der Dosierwalze nur in einer fest vorgegebenen Montagsposition montiert werden kann, in welcher die Durchgangsöffnungen des Hohlkörpers im Wesentlichen nach unten weisen, so dass gegebenenfalls in den Hohlkörper eingedrungene Verunreinigungen, wie Staub, Feuchtigkeit oder dergleichen, durch die Durchgangsöffnungen hindurch nach unten abfließen können und die im Innern des Hohlkörpers festgelegten Antriebe der Dosierradsegmente keinen Schaden nehmen.

In Bezug auf die geometrische Formgebung der Dosierklappen des erfindungsgemäßen Dosierorgans kann in vorteilhafter Ausgestaltung vorgesehen sein, dass die Dosierklappen an ihren einander zugewandten Seiten Trennwände aufweisen, welche eine zum Außenumfang der Dosierwalze zumindest abschnittsweise komplementäre Form aufweisen und zur gegenseitigen Abdichtung der Dosierklappen dienen. Die sich in Umfangsrichtung der Dosierwalze erstreckenden Trennwände der Dosierklappen, welche den Dosierklappen eine wannenähnliche Form verleihen, können hierbei insbesondere zumindest abschnittsweise eine im Wesentlichen zu dem Außenquerschnitt der Dosierwalze komplementäre Formgebung besitzen, um zu verhindern, dass während des Dosiervorgangs Verteilgut von der einen in eine benachbarte Dosierklappe gelangen kann, was insbesondere dann vermieden werden sollte, wenn unterschiedliche, z.B. einer jeweiligen Dosierklappe zugeordnete Axialabschnitte der Dosierwalze oder insbesondere einzelne, einer jeweiligen Dosierklappe zugeordnete und unabhängig voneinander rotationsangetriebene Dosierradsegmente der Dosierwalze verschiedene Verteilorgane unterschiedlicher Teilbreiten der Verteilmaschine mit Verteilgut versorgen.

Darüber hinaus kann vorzugsweise vorgesehen sein, dass zwischen den jeweiligen Dosierklappen in Bezug auf die Dosierklappen stationäre, d.h. während des Betriebs nicht verschwenkbare, Zwischenwände angeordnet sind, welche insbesondere eine den Trennwänden der Dosierklappen im Wesentlichen entsprechende Form aufweisen, wenn sich die Dosierklappen in ihrer Betriebsposition befinden. Die Zwischenwände können einerseits gleichfalls dazu dienen, einen Übertritt von Verteilgut von einer der Dosierklappen in benachbarte Dosierklappen, also in Axialrichtung der Dosierwalze, während des Dosiervorgangs zu verhindern, andererseits stellen die zwischen den Dosierklappen angeordneten Zwischenwände insbesondere sicher, dass die Dosierklappen mechanisch voneinander getrennt und unabhängig voneinander zwischen ihrer Betriebsposition und ihrer Ausweichposition verschwenkt werden können, ohne dass die Gefahr besteht, dass zwei benachbarte Dosierklappen, z.B. infolge eines in deren Zwischenraum eingetreten Verteilgutpartikels, aneinander verklemmt werden.

In diesem Zusammenhang hat es sich als besonders vorteilhaft erwiesen, wenn die Dosierwalze eine Mehrzahl an Trennringen aufweist, welche unter einem der Breite einer jeweiligen Dosierklappe im Wesentlichen entsprechenden axialen Abstand voneinander angeordnet sind und mit den Trennwänden jeweils benachbarter Dosierklappen und/oder gegebenenfalls mit den zwischen den jeweiligen Dosierklappen angeordneten Zwischenwänden zusammenwirken. Die Trennwände der Dosierklappen und/oder vorzugsweise die Zwischenwände besitzen in diesem Fall insbesondere eine zumindest abschnittsweise im Wesentlichen zu dem Außenquerschnitt der Trennringe der Dosierwalze komplementäre Formgebung, um - wie weiter oben beschrieben - zu verhindern, dass während des Dosiervorgangs Verteilgut von der einen in eine benachbarte Dosierklappe gelangen kann.

In konstruktiver Hinsicht kann z.B. vorzugsweise vorgesehen sein, dass die Schwenkachse der Dosierklappen von einer an dem Dosiergehäuse angeordneten Welle gebildet ist, an welcher einerseits die Dosierklappen schwenkbar gelagert sind und an welcher andererseits einer jeweiligen Dosierklappe zugeordnete Widerlager drehfest befestigt sind, welche zur mechanischen Vorbelastung einer jeweiligen Dosierklappe in deren Betriebsposition dienen. Die Welle kann hierbei beispielsweise ein Mehrkantprofil besitzen, an welchem die Widerlager mittels eines hierzu komplementären Mehrkantprofils drehfest festgelegt sind, wohingegen die Dosierklappen beispielsweise mit einer ihre Schwenkachse bildenden kreisrunden Bohrung versehen sein können, deren Innenquerschnitt etwa dem maximalen Außenquerschnitt des Mehrkantprofils der Welle entspricht. Die Widerlager können sich beispielsweise im Wesentlichen radial von der Welle fort erstrecken, wobei zwischen einem jeweiligen Widerlager und einer jeweiligen Dosierklappe eine Feder, z.B. eine Schraubenfeder, wirksam ist, um eine jeweilige Dosierklappe elastisch in Richtung ihrer Betriebsposition vorzubelasten. Eine solche Ausgestaltung ermöglicht ferner einen zumindest teilweise modularen Aufbau des Dosierorgans, indem die Dosierklappen einschließlich deren Widerlager universell für verschiedene Dosierorgane mit Dosierwalzen unterschiedlicher Länge verwendbar sind, wobei lediglich deren Anzahl an die Länge der jeweiligen Dosierwalze angepasst werden muss.

Sofern zwischen den Dosierklappen in Bezug auf diese stationäre Zwischenwände der vorbeschriebenen Art vorgesehen sind, so können die Zwischenwände vorzugsweise gleichfalls drehfest an der die Schwenkachse der Dosierklappen bildenden Welle befestigt sein, was wiederum beispielsweise mittels zueinander komplementärer Mehrkantprofile geschehen kann, wie es vorstehend in Bezug auf die Widerlager erläutert ist.

Gemäß einer vorteilhaften Weiterbildung kann in diesem Zusammenhang vorgesehen sein, dass die die Schwenkachse der Dosierklappen bildende Welle drehbar an dem Dosiergehäuse gelagert ist, wobei die Welle zwischen einer Betriebsposition, in welcher die Dosierklappen unter mechanischer Vorbelastung in Richtung ihrer Betriebsposition zwischen ihrer Betriebsposition und ihrer Ausweichposition verschwenkbar sind, und einer Restmengenentleer- und Wartungsposition, in welcher die Dosierklappen von der Dosierwalze fort verschwenkt sind, hin und her drehbar ist. Durch Verdrehen der die Schwenkachse der Dosierklappen bildenden Welle aus ihrer Betriebsposition in ihre Restmengenentleer- und Wartungsposition kann folglich die Dosierwalze des Dosierorgans, z.B. zu Reinigungs- und Wartungszwecken oder auch zur Restmengenentleerung am Ende eines Verteilvorgangs, einfach von außen zugänglich gemacht werden. Darüber hinaus es ist auf diese Weise insbesondere möglich, eine Blockade des Dosierorgans, beispielsweise infolge eines in das Verteilgut hineingeratenen großen Steines, welcher die Dosierwalze auch bei in ihre Ausweichposition verschwenkter Dosierklappe nicht zu passieren vermag, zu lösen, indem der Stein manuell entfernt wird.

Zur Betätigung der die Schwenkachse der Dosierklappen bildenden Welle zwischen ihrer Betriebsposition und ihrer Restmengenentleer- und Wartungsposition kann beispielswiese ein drehfest mit der Welle verbundener Hebel, z.B. nach Art einer Handhabe, vorgesehen ist, um die Welle zwischen ihrer Betriebsposition und ihrer Restmengenentleer- und Wartungsposition hin und her zu drehen, wobei der Hebel insbesondere an dem Dosiergehäuse arretierbar ist, wenn sich die Welle in ihrer Betriebsposition befindet. Selbstverständlich kann anstelle eines solchen Hebels grundsätzlich auch ein motorischer Drehantrieb der die Schwenkachse der Dosierklappen bildenden Welle vorgesehen sein, um die Welle in fernbedienbarer Weise zwischen ihrer Betriebsposition und ihrer Restmengenentleer- und Wartungsposition hin und her zu drehen.

Es sei an dieser Stelle darauf hingewiesen, dass es im Falle einer gegebenenfalls auftretenden Blockade der Dosierwalze, z.B. aufgrund eines in das Verteilgut hineingeratenen großen Steines, welcher den Zwischenraum zwischen der Dosierwalze und der Dosierklappe auch dann nicht zu passieren vermag, wenn letztere in ihrer Ausweichposition verschwenkt worden ist, selbstverständlich möglich ist, die Rotationsrichtung der Dosierwalze oder eines jeweiligen Dosierradsegmente derselben temporär umzukehren, um den Stein wieder zurück in Richtung des Dosierauslasses zu transportieren und die mechanische Belastung des Dosierorgans auf diese Weise zu vermindern, bevor beispielsweise die die Schwenkachse der Dosierklappen bildenden Welle aus ihrer Betriebsposition in ihre Restmengenentleer- und Wartungsposition verdreht wird, in welcher die Dosierklappen von der Dosierwalze fort verschwenkt sind und der Stein manuell entfernt werden kann. Eine solche Blockade des Dosierorgans kann beispielsweise sensorisch erfasst werden, wie mittels dem bzw. den Antrieb(en) der Dosierwalze bzw. deren Dosierradsegmenten zugeordneter Überlastsensoren. Darüber hinaus kann der bzw. können die Antriebe der Dosierwalze auch für eine sehr langsame, kontinuierliche oder insbesondere reziprokierende Rotation, z.B. von einer Umdrehung pro mehreren Stunden, der Dosierwalze bzw. deren Dosierradsegmenten auch im Stillstand der Verteilmaschine sorgen, um Verdichtungen, Verklumpungen und Anbackungen von Resten des Verteilgutes in den Nocken oder Zellen der Dosierwalze auch bei längeren Stillstandszeiten zu verhindern.

Gemäß einer vorteilhaften Weiterbildung kann vorgesehen sein, dass das Dosiergehäuse ferner eine Abdeckung aufweist, welche - in Rotationsrichtung der Dosierwalze betrachtet - stromab der Dosierklappen angeordnet ist und sich zumindest über den Dosierauslass des Dosiergehäuses erstreckt, um das dosierauslassseitig dosierte Verteilgut vor äußeren Einwirkungen zu schützen und ein Eindringen von Schmutz und Feuchtigkeit in das Dosiergehäuse weitestgehend zu verhindern.

In konstruktiver Hinsicht kann eine solche Abdeckung vorzugsweise eine Mehrzahl an in Axialrichtung der Dosierwalze nebeneinander angeordneten Abdeckmodulen aufweisen, deren Breite im Wesentlichen der Breite einer jeweiligen Dosierklappe entspricht und welche insbesondere formschlüssig aneinander befestigbar sind. Auf diese Weise ergibt sich einerseits ein für Dosierwalzen mit verschiedener axialer Breite modularer Aufbau der Abdeckung, wobei lediglich die Anzahl an Abdeckmodulen an die Länge der jeweiligen Dosierwalze angepasst werden muss. Andererseits lässt sich die Abdeckung durch, insbesondere werkzugfreies, Aneinanderfügen der formschlüssig ineinander eingreifenden Abdeckmodule sehr einfach und bequem montieren.

Die Abdeckung kann beispielsweise zwischen einer Abdeckposition und einer Öffnungsposition schwenkbar an dem Dosiergehäuse gelagert sein, wobei die Abdeckung insbesondere an einer an dem Dosiergehäuse festgelegten Stange schwenkbar gelagert sein kann.

Darüber hinaus kann die Abdeckung in ihrer Abdeckposition vorzugsweise mittels eines Schnellverschlusses, insbesondere ohne Zuhilfenahme von Werkzeugen, an dem Dosiergehäuse arretierbar sein. Dies kann beispielsweise mittels einer im Bereich des der an dem Dosiergehäuse festgelegten weiteren Stange entgegengesetzten Endes der Abdeckung bzw. der Abdeckmodule angeordneten Stange geschehen, welche die Abdeckung in Axialrichtung der Dosierwalze durchsetzt und zu beiden Seiten von der Abdeckung vorsteht, wobei die weitere Stange z.B. in im Wesentlichen U-förmige Aufnahmen des Dosiergehäuses eingeführt werden kann, wonach die U-förmigen Aufnahmen, z.B. mittels einer Schraube, eines Stiftes oder dergleichen, verschlossen werden, um die weitere Stange der Abdeckung unverlierbar in den U-förmigen Aufnahmen zurückzuhalten.

Darüber hinaus kann die Abdeckung bzw. können deren Abdeckmodule eine mit der Dosierwalze zusammenwirkende Reinigungseinrichtung, insbesondere in Form von Bürsten, aufweisen, welche in der Abdeckposition der Abdeckung - in Rotationsrichtung der Dosierwalze betrachtet - im Bereich oder stromab des Dosierauslasses angeordnet ist, so dass beim Rotieren der Dosierwalze die Bürsten etwaige Verteilgutreste von der Dosierwalze abstreifen und diese in den Dosierauslass gelangen.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen Verteilmaschine zum Ausbringen von Verteilgut in Form eines als Nachläufer ausgestalteten Pneumatikstreuers für landwirtschaftliche Zwecke;
- Fig. 2: eine schematische perspektivische Detailansicht der Verteilmaschine gemäß Fig. 1 im Bereich zwei ihrer Dosierorgane;
- Fig. 3: eine schematische perspektivische Detailansicht eines der Dosierorgane der Verteilmaschine gemäß Fig. 1 und 2 von schräg oben betrachtet;
- Fig. 4: eine schematische perspektivische Detailansicht des Dosierorgans gemäß Fig. 3 von schräg unten betrachtet mit abgenommener Abdeckung;
- Fig. 5: eine schematische Querschnittsansicht durch das Dosierorgan gemäß Fig. 3 und 4 im Bereich einer der Dosierklappen, welche sich in ihrer Betriebsposition befindet;
- Fig. 6: eine der Fig. 5 entsprechende schematische Querschnittsansicht durch das Dosierorgan gemäß den Fig. 3 bis 5 im Bereich einer der Dosierklappen, welche sich in ihrer Ausweichposition befindet;
- Fig. 7: eine schematische Seitenansicht des Dosierorgans gemäß den Fig. 3 bis 6 von einer Stirnseite der Dosierwalze aus betrachtet;
- Fig. 8: eine schematische perspektivische Detailansicht nur des Dosiergehäuses des Dosierorgans gemäß den Fig. 3 bis 7 mit abgenommener Abdeckung und abgenommenen Dosierklappen;
- Fig. 9: eine schematische perspektivische Detailansicht nur einer Baueinheit des Dosierorgans gemäß den Fig. 3 bis 8 mit den Dosierklappen, deren Widerlager und Zwischenwänden; und
- Fig. 10: eine schematische perspektivische Detailansicht nur der Abdeckung des Dosierorgans gemäß den Fig. 3 bis 9.

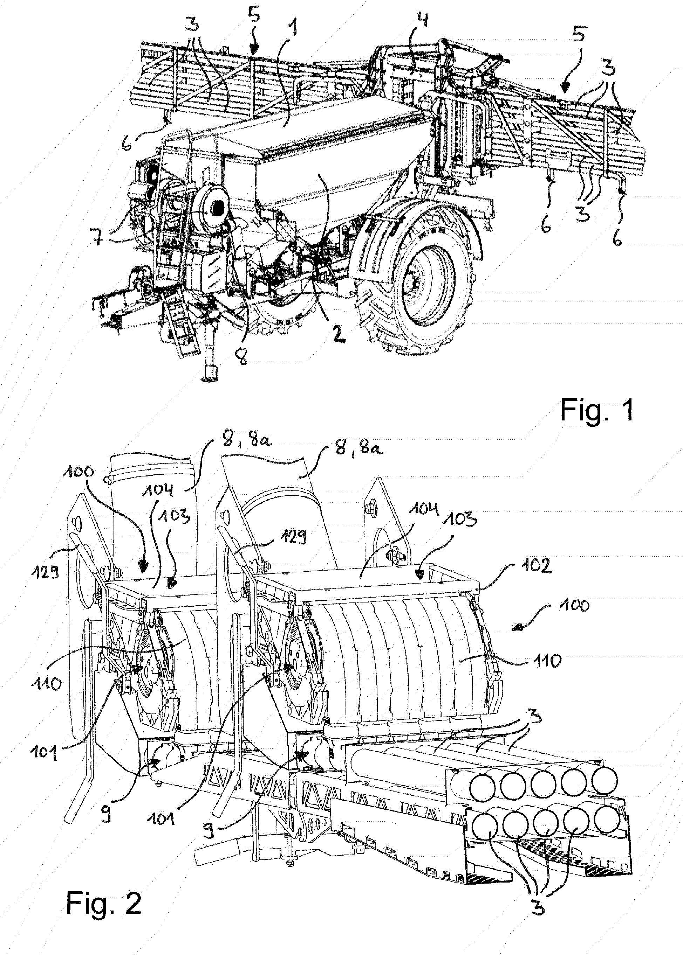

In der Fig. 1 ist ein Ausführungsbeispiel einer Verteilmaschine in Form eines von einer Zugmaschine, wie einem Traktor (nicht gezeigt), gezogenen einachsigen Nachläufers exemplarisch wiedergegeben, welche als pneumatischer Streuer für pulver- oder partikelförmiges Verteilgut, wie Dünger und/oder Saatgut, ausgebildet ist. Die Verteilmaschine weist einen, im vorliegenden Fall z.B. mit einer Überdachung 1 versehenen, von einem Tragrahmen aufgenommenen Vorratsbehälter 2 zur Aufnahme des Verteilgutes auf, dessen seitlichen, vorderen und rückwärtigen Wände sich im unteren Bereich nach innen zu wenigstens einer Bodenmulde verjüngen, welche in der Fig. 1 nicht erkennbare Austrittsöffnungen aufweist, welchen jeweils ein Dosierorgan (vgl. das Bezugszeichen 100 der Fig. 2 ff) nachgeordnet ist, das weiter unten unter Bezugnahme auf die Fig. 2 bis 10 im Einzelnen erläutert ist. Dabei können z.B. jeweils eins, zwei, drei oder auch mehrere Austrittsöffnungen an jeder Längsseite des unteren Bereiches des Vorratsbehälters 2 vorgesehen sein, die mit jeweils einem Dosierorgan 100 versehen sind.

Die in der Fig. 1 nicht im Einzelnen erkennbaren Dosierorgane 100 sind beispielsweise in unterschiedlicher Höhe angeordnet und versorgen jeweils eine Mehrzahl an Förderleitungen 3 mit dem dosierten Verteilgut, wobei die Förderleitungen 3 jeweils zu Paketen zusammengefasst sind und zunächst nach hinten zu einem Hubrahmen 4 geführt und sodann nach außen umgelenkt sind. Zu diesem Zweck nimmt der Hubrahmen 4 zwei (abgebrochen dargestellte) Ausleger 5 auf, welche sich in ihrer in der Fig. 1 dargestellten Betriebsstellung zu beiden Seiten im Wesentlichen senkrecht zur Fahrtrichtung der Verteilmaschine erstrecken. Jeder Ausleger 5 ist dabei schwenkbar an dem Hubrahmen 4 angelenkt und zweckmäßigerweise mehrgelenkig ausgeführt, so dass einzelne Auslegerabschnitte gemeinsam mit den Förderleitungen 3 aus der nach außen gestreckten Betriebsstellung gemäß der Fig. 1 in eine zusammengeklappte Ruhe- bzw. Transportposition angeklappt werden können (nicht zeichnerisch wiedergegeben). Die von den Auslegern 5 aufgenommenen Förderleitungen 3 enden in unterschiedlichen Abständen von der Längsachse der Verteilmaschine an Verteilorganen 6, welche sich beispielsweise an einen endständigen Krümmer einer jeweiligen Förderleitung 3 anschließen und als Prallorgane, z.B. in Form von Pralltellern bzw. Prallplatten, ausgestaltet sind, um den aus den Förderleitungen 3 austretenden Verteilgutstrom in jeweils nebeneinander angeordnete Flächenbereiche auf dem Boden zu verteilen.

Wie weiterhin der Fig. 1 und insbesondere auch der Fig. 2 zu entnehmen ist, sind vor der - in Fahrtrichtung betrachtet - vorderen Stirnwand des Vorratsbehälters 2 zwei Gebläse 7 angeordnet, welche zur Erzeugung eines Luftförderstromes zum Transport des mittels der Dosierorgane 100 dosierten Verteilgutes durch die Förderleitungen 3 dienen und aus Platzgründen beispielsweise mit ihrer Achse quer zur Fahrtrichtung angeordnet sind. Die Druckleitungen 8 eines jeden Gebläses 7 weisen je einen, einem jeden Dosierorgan 100 zugeordneten Abgang 8a auf, welcher stromauf eines jeweiligen Dosierorgans 100 an einen jeweiligen, in den Fig. 1 und 2 nicht erkennbaren Luftverteiler mündet, um die Druckluft auf die einem jeden Dosierorgan 100 zugeordnete Anzahl an Förderleitungen 3 aufzuteilen. Unmittelbar stromab eines jeden Luftverteilers ist jeder Förderleitung 3 eine Übergabekammer 9 (vgl. die Fig. 2) zugeordnet, welche in üblicher Weise mit einem eine Düse und einen Diffusor umfassenden Injektor (nicht gezeigt) ausgestattet sein kann und in welche das dosierte Verteilgut von dem jeweiligen Dosierorgan 100 übergeben wird. Die Anzahl an einem jeden Dosierorgan 100 zugeordneten Förderleitungen 3 entspricht der relativ großen Breite einer üblichen Teilbreitenschaltung während des Betriebs. Die Förderleitungen 3 können ferner zwischen den Dosierorganen 100 als getrennte Abschnitte ausgebildet sein, um einen Abschnitt derselben, z.B. gemeinsam mit einer jeweiligen Übergabekammer 9, nach unten klappen und auf diese Weise z.B. Abdrehproben durchführen oder den Vorratsbehälter 1 entleeren zu können.

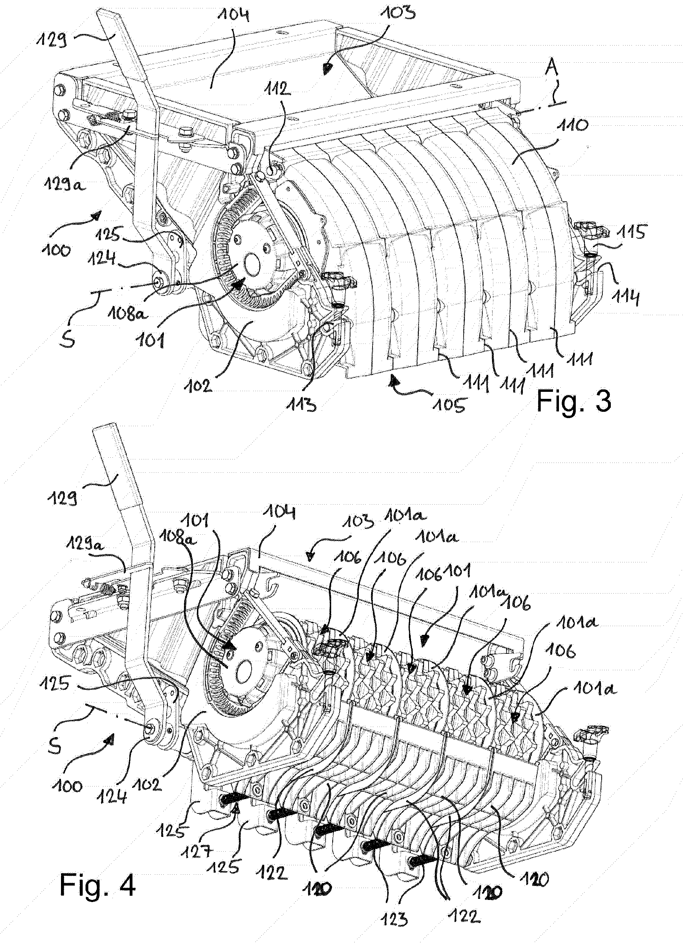

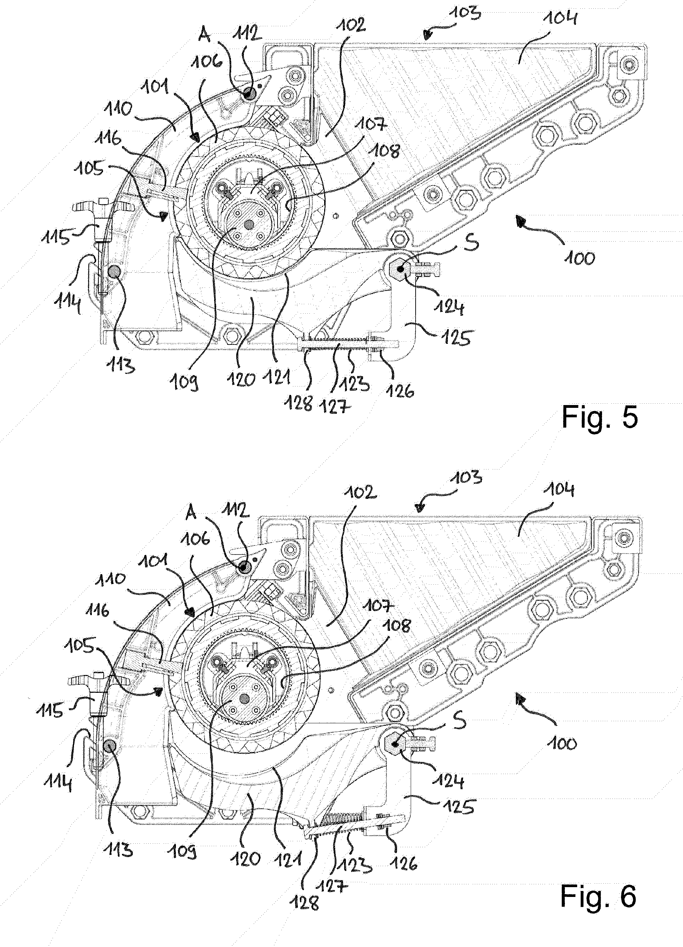

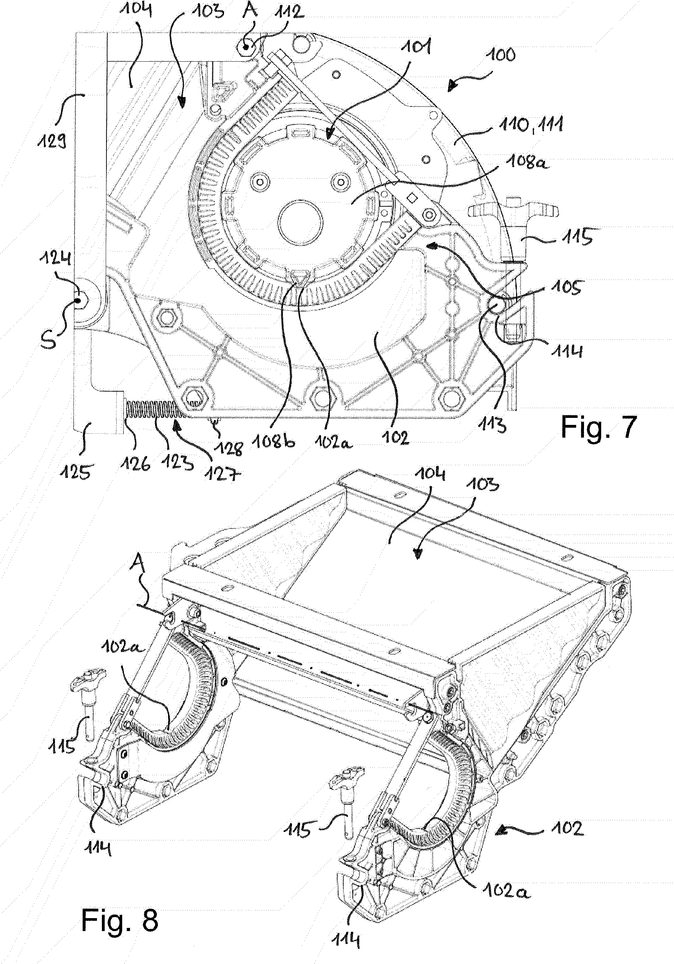

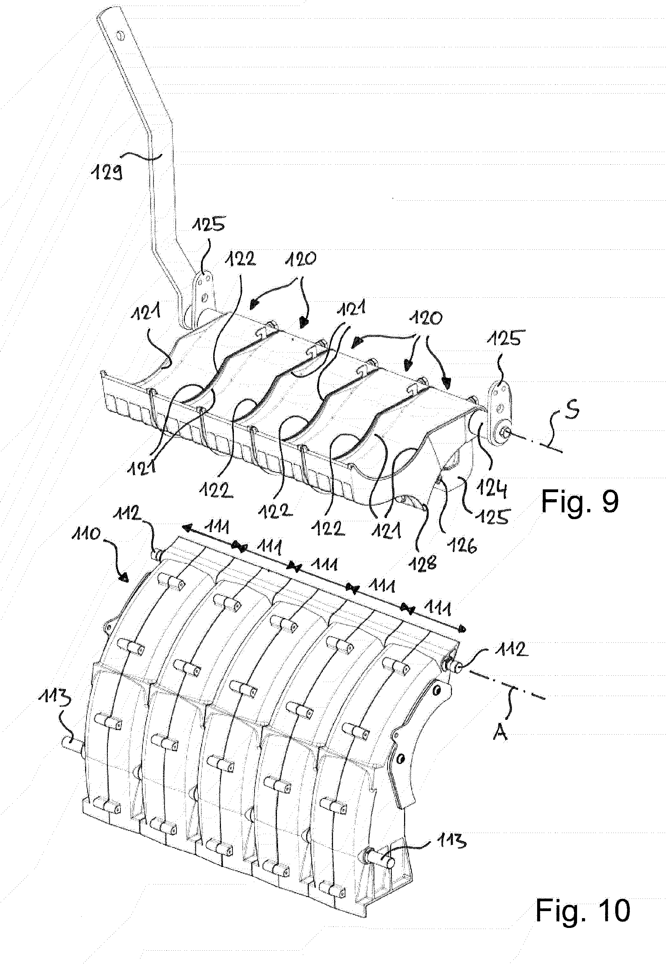

Die Fig. 2 zeigt eine Detailansicht der pneumatischen Verteilmaschine im Bereich zwei ihrer Dosierorgane 100, welche jeweils eine rotierbar angetriebene Dosierwalze 101 zur Dosierung des Verteilgutes aufweisen, die im vorliegenden Fall beispielsweise nach Art einer Nockenwalze ausgestaltet ist (vgl. hierzu insbesondere die Fig. 4 bis 6), aber je nach Art des Verteilgutes selbstverständlich auch nach Art einer Zellenradwalze oder in beliebiger anderer bekannter Weise ausgebildet sein kann. Jedes Dosierorgan 100 versorgt dabei eine Mehrzahl an - hier fünf - Förderleitungen 3 und umfasst ein Dosiergehäuse 102 (vgl. insbesondere auch die Fig. 8), in welchem die um eine im vorliegenden Fall im Wesentlichen horizontale Drehachse rotierbar angetriebene Dosierwalze 101 gelagert ist und welches unterhalb einer jeweiligen Austrittsöffnung des Vorratsbehälters 2 angeordnet ist (siehe oben) und das Verteilgut bis an die Oberfläche der Dosierwalze 101 zu leiten vermag. Zu diesem Zweck verfügt das Dosiergehäuse 102 eines jeweiligen Dosierorgans 100 einerseits über einen mit einer jeweiligen Austrittsöffnung des Vorratsbehälters 2 kommunizierenden, z.B. unmittelbar unterhalb einer jeweiligen Auslauföffnung angeordneten Dosiereinlass 103, welcher beispielsweise einen Einlauftrichter 104 umfasst. Andererseits verfügt das Dosiergehäuse 102 eines jeweiligen Dosierorgans 100 über einen - in Rotationsrichtung der Dosierwalze 101 betrachtet - stromab des Dosiereinlasses 103 angeordneten Dosierauslass 105 (vgl. insbesondere die Fig. 5 bis 7), welcher mit der Übergabekammer einer jeweiligen Förderleitung 3 kommuniziert und seinerseits z.B. unmittelbar oberhalb derselben angeordnet ist. Darüber hinaus ist ein jeweiligen Dosierorgan 100 mit einer Abdeckung 110 ausgestattet, welche sich zumindest über den Dosierauslass 105 bis - wiederum in Rotationsrichtung der Dosierwalze 101 betrachtet - hin zu dem Einlauftrichter 104 des Dosiereinlasses 103 erstreckt und weiter unten unter Bezugnahme auf die Fig. 10 näher erläutert ist.

In der Fig. 3 ist nochmals eines der Dosierorgane entsprechend der Fig. 2 in Form einer perspektivischen Detailansicht wiedergegeben.

Wie insbesondere der Fig. 4 sowie den Fig. 5 und 6 zu entnehmen ist, umfasst die Dosierwalze 101 eines jeden Dosierorgans 100 bei dem vorliegenden Ausführungsbeispiel eine der Anzahl an Förderleitungen 3, welche von dem jeweiligen Dosierorgan 100 versorgt sind (vgl. hierzu die Fig. 2), entsprechende Anzahl an - hier fünf - Dosierradsegmenten 106, welche unabhängig voneinander rotierbar angetrieben sind. Dies geschieht bei dem gezeigten Ausführungsbeispiel - insoweit entsprechend der eingangs zitierten WO 2018/ 219489 A1 - mittels je eines, einem jeweiligen Dosierradsegment 106 zugeordneten, unabhängig voneinander drehzahlsteuer- und/oder regelbaren Elektromotors 107 (vgl. die Fig. 5 und 6), um sowohl einzelne Dosierradsegmente 106 der Dosierwalze 101 stillsetzen als auch die Dosierradsegmente 106 mit unterschiedlichen Rotationsgeschwindigkeiten antreiben zu können. Der zum Antrieb der Dosierradsegmente 106 dienende Elektromotor 107 kann beispielsweise von einem als Getriebemotor ausgebildeten bürstenlosen Gleichstrommotor gebildet sein, wobei grundsätzlich aber selbstverständlich auch andersartige Elektro- oder Hydraulikmotoren zum Einsatz gelangen können. Wie ferner in den Fig. 5 und 6 erkennbar, sind die Dosierradsegmente 106 der Dosierwalze 101 auf einem sich koaxial zu ihrer Drehachse erstreckenden, im Wesentlichen rohrförmigen Hohlkörper 108 gelagert, welcher starr, aber vorzugsweise lösbar, in dem Dosiergehäuse 102 festgelegt und an seinen stirnseitigen Enden mit je einer Verschlusskappe 108a versehen ist (vgl. die Fig. 3, 4 und 7). Die - hier elektrischen - Antriebe 107 der Dosierradsegmente 106 der Dosierwalze 101 sind vor äußeren Einwirkungen geschützt im Innern des im Wesentlichen rohrförmigen Hohlkörpers 108 aufgenommen und beispielsweise im Innern des Hohlkörpers 108 verschraubt. Der im Wesentlichen rohrförmige Hohlkörper 108 besitzt eine insgesamt etwa kreiszylindrische Form und dient überdies zur Lagerung eines jeweiligen Dosierradsegmentes 106 der Dosierwalze 101, z.B. mittels Gleit- oder Wälzlagern an seinem Außenumfang. Wie aus den Fig. 5 und 6 ersichtlich, weist der im Wesentlichen rohrförmige Hohlkörper 108 eine Mehrzahl an radialen Durchgangsöffnungen auf, deren Anzahl insbesondere der Anzahl an Dosierradsegmenten 106 der Dosierwalze 101 entspricht und welche von einem jeweiligen, auf dem Hohlkörper 108 gelagerten Dosierradsegment 106 übergriffen sind. Die Durchgangsöffnungen des Hohlkörpers 108 dienen zur Verbindung eines jeweiligen, im Innern des Hohlkörpers 108 aufgenommenen Antriebs 107 mit einem jeweiligen Dosierradsegment 106, welches zu diesem Zweck eine sich um einen Innenumfangsabschnitt desselben erstreckende Innenverzahnung 112 aufweist, welche durch eine jeweilige Durchgangsöffnung des Hohlkörpers 108 freigelassen ist. Die Innenverzahnung eines jeweiligen Dosierradsegmentes 106 steht mit je einem Zahnrad 109 im Eingriff, welches auf je einer, in Bezug auf die Drehachse der Dosierradsegmente 106 exzentrisch angeordneten Abtriebswelle eines jeweiligen Antriebs 107 sitzt, so dass ein jeweiliger Antrieb 107 ein jeweiliges, auf dem Hohlkörper 108 gelagertes Dosierradsegment 106 der Dosierwalze 101 unabhängig voneinander rotierbar anzutreiben vermag. Wie der Fig. 7 zu entnehmen ist, ist die Verschlusskappe 108a des die Dosierradsegmente 106 der Dosierwalze 101 lagernde Hohlkörpers 108 darüber hinaus mit einer Zentriereinrichtung 108b, z.B. in Form eines radial nach außen vorstehenden Zentriervorsprungs, ausgestattet, welcher mit einer hierzu komplementären Zentriereinrichtung 102a des Dosiergehäuses 102, z.B. in Form einer radialen Zentrierausnehmung, zusammenwirkt, um den Hohlkörper 108 in einer fest vorgegebenen Montageposition, in welcher die von einem jeweiligen Zahnrad 109 eines jeweiligen Antriebs 107 durchgriffenen Durchgangsöffnungen des Hohlkörpers 108 im Wesentlichen nach unten weisen und gegebenenfalls in den Hohlkörper 108 eingetretene Verunreinigungen, wie Staub, Feuchtigkeit etc., nach unten abgeführt werden können, selbstzentrierend an dem Dosiergehäuse 102 festzulegen.

Um sicherzustellen, dass ein jeweiliges Dosierradsegment 106 der Dosierwalze 101 eines jeden Dosierorgans 100 ausschließlich das ihm zugeordnete Verteilorgan 6 versorgt und nicht etwa von benachbarten Dosierradsegmenten 106 bereits dosierte Massenströme an Verteilgut sich teilweise vermischen bzw. in die Übergabekammer einer benachbarten Förderleitung 3 gelangen, erweist es sich im Übrigen von Vorteil, wenn die Dosierwalze 101 eine Mehrzahl an Trennringen 101a (vgl. die Fig. 4) aufweist, welche in einem der axialen Länge eines jeweiligen Dosierradsegmentes 106 der Dosierwalze 101 etwa entsprechenden Abstand voneinander zwischen jeweils zwei benachbarten Dosierradsegmenten 106 angeordnet sind und vorzugsweise eine zumindest geringfügig größere radiale Erstreckung besitzen als die Dosierradsegmente 106.

Wie sich insbesondere aus den Fig. 4 bis 6 und 9 ergibt, ist das Dosiergehäuse 102 eines jeweiligen Dosierorgans 100 - in Rotationsrichtung der Dosierwalze 101 betrachtet, d.h. in den Darstellungen der Fig. 5 und 6 im Uhrzeigersinn - zwischen seinem Dosiereinlass 103 und seinem Dosierauslass 105 mit einer Mehrzahl an in Axialrichtung der Dosierwalze 101 nebeneinander angeordneten Dosierklappen 120 versehen, welche eine zum Außenumfang der Dosierradsegmente 106 der Dosierwalze 110 zumindest abschnittsweise komplementäre Form aufweisen, wobei die Dosierklappen 120 insbesondere an ihrem dem Dosiereinlass 103 zugewandten Abschnitt einen sich in Richtung des Dosierauslasses 105 verjüngenden Spalt zwischen sich und der Dosierwalze 101 - oder genauer: einem jeweiligen Dosierradsegment 106 der Dosierwalze 101 - bilden und an ihrem dem Dosierauslass 105 zugewandten Abschnitt eine etwa zu dem Außenumfang der Dosierwalze 101 komplementäre Form besitzen, wenn sie sich in ihrer in der Fig. 5 dargestellten Betriebsposition befinden. Die Dosierklappen 120 sind dabei jeweils unabhängig voneinander um eine gemeinsame, parallel zur Drehachse der Dosierwalze 101 angeordnete Schwenkachse S zwischen der in der Fig. 5 wiedergegebenen Betriebsposition, in welcher sie in der vorgenannten Weise mit der Dosierwalze 110 zur Dosierung des dem Dosiergehäuse 103 über den Dosiereinlass 103 aufgegebenen Verteilgutes zusammenwirken, und einer in der Fig. 6 dargestellten Ausweichposition, in welcher sie mit Abstand von der Dosierwalze 101 von dieser fort nach unten verschwenkt sind, verschwenkbar, so dass eine jeweilige Dosierklappe 120 an demjenigen Axialabschnitt der Dosierwalze 101, an welcher z.B. eine verklumpte Verteilgutaggregation, eine Verunreinigung des Verteilgutes oder dergleichen gerade von der Dosierwalze 101 aufgenommen worden ist, lokal von der Dosierwalze 101 zurückzuweichen vermag, um die Verunreinigung über den Dosierauslass 105 abzuführen, ohne dass an anderen Axialabschnitten der Dosierwalze 101, an welchen die Dosierklappen 120 in ihrer Betriebsposition gemäß der Fig. 5 verbleiben, eine Überdosierung an Verteilgut stattfindet. Zu diesem Zweck entspricht die (in Axialrichtung der Dosierwalze 101 betrachtete) Breite einer jeweiligen Dosierklappe 120 im Wesentlichen der (wiederum in Axialrichtung der Dosierwalze 101 betrachteten) Breite eines jeweiligen Dosierradsegmentes 106, so dass einem jeden Dosierradsegment 106 der Dosierwalze 101 eine unabhängig voneinander verschwenkbar Dosierklappe 120 zugeordnet ist.

Wie insbesondere auch der Fig. 9 zu entnehmen ist, sind die Dosierklappen 120 an ihren einander zugewandten Seiten mit Trennwänden 121 versehen, welche eine zum Außenumfang der Dosierwalze 101 zumindest abschnittsweise komplementäre Form aufweisen und zur gegenseitigen Abdichtung der Dosierklappen 120 dienen, um sicherzustellen, dass ein jeweiliges, mit einer jeweiligen Dosierklappe 120 zusammenwirkendes Dosierradsegment 106 der Dosierwalze 101 ausschließlich das ihm zugeordnete Verteilorgan 6 versorgt und nicht etwa von benachbarten Dosierradsegmenten 106 bereits dosierte Massenströme an Verteilgut sich teilweise vermischen bzw. in die Übergabekammer einer benachbarten Förderleitung 3 gelangen. Die Dosierklappen 120 besitzen somit eine etwa wannenähnliche Formgebung. Der Abstand der Trennwände 121 einer jeden Dosierklappe 120 bzw. deren Breite entspricht, wie oben erwähnt, im Wesentlichen der axialen Breite eines jeweiligen Dosierradsegmentes 106 der Dosierwalze 101, wobei bei dem vorliegenden Ausführungsbeispiel die zwischen den einzelnen Dosierradsegmenten 106 angeordneten Trennringe 101a der Dosierwalze 101 unter einem der Breite einer jeweiligen Dosierklappe 120, also dem Abstand deren Trennwände 121 voneinander, entspricht, so dass die Trennringe 101a der Dosierwalze 101 mit den Trennwänden 121 jeweils benachbarter Dosierklappen 120 zusammenwirken (vgl. insbesondere einerseits die Fig. 4, andererseits die Fig. 5 und 6). Die Trennwände 121 der Dosierklappen 120 weisen zu diesem Zweck im Bereich ihres dem Dosierauslass 105 zugewandten, freien Endes eine zu den Trennringen 101a der Dosierwalze 101 komplementäre, im Wesentlichen kreisbogenförmig konkave Formgebung auf. Darüber hinaus sind bei dem zeichnerisch wiedergegebenen Ausführungsbeispiel zwischen den jeweiligen Dosierklappen 120 in Bezug auf die Dosierklappen 120 stationäre, d.h. nicht um die Schwenkachse S verschwenkbare Zwischenwände 122, z.B. in Form dünner Blechteile, angeordnet (vgl. die Fig. 4 und 9), welche eine den Trennwänden 121 der Dosierklappen 120 im Wesentlichen entsprechende Form aufweisen, wenn sich die Dosierklappen 120 in ihrer Betriebsposition gemäß der Fig. 5 befinden. Die Zwischenwände 122 vermögen dabei gleichfalls dazu beizutragen, einen Übertritt von Verteilgut von einer der Dosierklappen 120 in benachbarte Dosierklappen 120, also in Axialrichtung der Dosierwalze 101, während des Dosiervorgangs zu verhindern, andererseits stellen die zwischen den Dosierklappen 120 angeordneten Zwischenwände 122 insbesondere sicher, dass die Dosierklappen 120 mechanisch voneinander getrennt und unabhängig voneinander zwischen ihrer Betriebsposition (siehe die Fig. 5) und ihrer Ausweichposition (siehe die Fig. 6) verschwenkt werden können, ohne dass die Gefahr besteht, dass zwei benachbarte Dosierklappen 120, z.B. infolge eines in deren Zwischenraum eingetreten Verteilgutpartikels, aneinander verklemmt werden.

Um die Dosierklappen 120 in ihrer in der Fig. 5 gezeigten Betriebsposition zu halten und ein bedarfsweises, temporäres Verschwenken in ihre in der Fig. 6 dargestellte Ausweichposition und wieder zurück zu ermöglichen, sind die Dosierklappen 120 in Richtung ihrer Betriebsposition mechanisch vorbelastet sind. Die mechanische Vorbelastung der Dosierklappen 120 in ihre Betriebsposition geschieht dabei in elastischer Weise, indem einer jeweiligen Dosierklappe 120 wenigstens eine Feder 123 zugeordnet ist, welche beim vorliegenden Ausführungsbeispiel in Form von Schraubenfedern ausgestaltet sind (vgl. insbesondere die Fig. 4 bis 6). Wie insbesondere aus den Fig. 5 und 6 hervorgeht, geschieht dies in konstruktiver Hinsicht bei dem zeichnerisch wiedergegebenen Ausführungsbeispiel derart, dass die Schwenkachse S der Dosierklappen 120 von einer an den beiden entgegengesetzten Stirnwänden des Dosiergehäuses 102, z.B. mittels je einer Befestigungslasche 125, angeordneten Welle 124 gebildet ist, an welcher einerseits die Dosierklappen 120 schwenkbar gelagert sind und an welcher andererseits einer jeweiligen Dosierklappe 120 zugeordnete Widerlager 125 drehfest befestigt sind. Zu diesem Zweck weist die Welle 124 z.B. ein Sechskantprofil auf, auf welchem die Widerlager 125 mittels einer hierzu komplementären Sechskantprofilbohrung drehfest gehalten sind. Entsprechendes gilt für die in Bezug auf die Dosierklappen 120 stationären Zwischenwände 122, welche ihrerseits mittels einer solchen Sechskantprofilbohrung drehfest an der die Schwenkachse S der Dosierklappen 120 bildenden Welle 124 befestigt sein können. Die Dosierklappen 120 hingegen sind beispielsweise mit Rundbohrungen versehen, so dass sie um das Sechskantprofil der Welle 124 frei verschwenkbar sind. Die Widerlager 125 sind im vorliegenden Fall von im Wesentlichen L-förmiger Gestalt und erstrecken sich jeweils von der Welle 124 etwa senkrecht nach unten. An dem freien Ende eines jeden Widerlagers 125 ist eine Gewindebuchse 126 um eine sich parallel zu der Welle 124 erstreckende Achse schwenkbar gelagert. Die Gewindebuchsen 126 dienen zur Aufnahme je eines Endes einer mit der jeweiligen Gewindebuchse 126 verschraubten Schraube 127, welche einen nach unten vorstehenden Fortsatz 128 einer jeweiligen Dosierklappe 120 durchsetzt und die Schraubenfeder 123 trägt, welche zwischen dem Fortsatz 128 einer jeweiligen Dosierklappe 120 und einem jeweiligen Widerlager 125 wirksam ist. Der Kopf der Schraube 127 befindet sich hierbei an der der Schraubenfeder 123 entgegengesetzten Seite des Fortsatzes 128 einer jeweiligen Dosierklappe 120, wobei die Schraube 127 den Fortsatz 128 in axial beweglicher Weise durchsetzt, ohne mit dem Fortsatz 128 verschraubt zu sein. Wird eine jeweilige Dosierklappe 120 demnach aus ihrer in der Fig. 5 gezeigten Betriebsposition entgegen ihrer mechanisch elastischen Vorbelastung in ihre Ausweichposition gemäß der Fig. 6 nach unten verschwenkt, z.B. infolge des Durchtrittes einer relativ großen Verteilgutaggregation zwischen einem jeweiligen Dosierradsegment 106 der Dosierwalze 101 und einer jeweiligen Dosierklappe 120, so wird die auf einer jeweiligen Schraube 127 sitzende Feder 123 aufgrund Verkürzung des Abstandes zwischen der Gewindebuchse 126 des Widerlagers 125 und dem Fortsatz 128 der in ihre Ausweichposition verschwenkten Dosierklappe 120 komprimiert, so dass die jeweilige Dosierklappe 120 mittels der Federkraft wieder in ihre Betriebsposition der Fig. 5 zurück verschwenkt wird, sobald die Verteilgutaggregation in den Dosierauslass 105 gelangt ist.

Bei dem gezeigten Ausführungsbeispiel ist überdies vorgesehen, dass die die Schwenkachse S der Dosierklappen 120 bildende Welle 124 ihrerseits drehbar an dem Dosiergehäuse 102 gelagert ist, wobei die Welle 124 zwischen der zeichnerisch wiedergegebenen Betriebsposition, in welcher die Dosierklappen 120 unter mechanisch elastischer Vorbelastung der jeweiligen Feder 123 in Richtung ihrer Betriebsposition zwischen ihrer Betriebsposition und ihrer Ausweichposition verschwenkbar sind, und einer Restmengenentleer- und Wartungsposition (in den Darstellungen der Fig. 5 und 6 durch Drehen der Welle 124 entgegen dem Uhrzeigersinn; nicht zeichnerisch dargestellt), in welcher die Dosierklappen 120 von der Dosierwalze 101 fort nach unten verschwenkt sind, hin und her drehbar ist, so dass die Dosierwalze 101 von unten leicht zugänglich wird. Während dies grundsätzlich z.B. auch mittels entsprechender motorischer Drehantriebe der Welle 124 geschehen kann (nicht gezeigt), ist zu diesem Zweck im vorliegenden Fall ein mit der die Schwenkachse S der Dosierklappen 120 bildenden Welle 124 drehfest verbundener Hebel 129 vorgesehen (vgl. die Fig. 2 bis 4, 7 und 9), welcher in der Betriebsposition der Welle 124 an einer entsprechenden Aufnahme 129a des Dosiergehäuses 102 arretiert werden kann (vgl. die Fig. 3 und 4). Um die Welle 124 zwischen ihrer Betriebsposition und ihrer Restmengenentleer- und Wartungsposition hin und her zu drehen, kann der Hebel 129 z.B. manuell außer Eingriff mit der Aufnahme 129a gebracht und nach unten verschwenkt werden.

Wie insbesondere aus den Fig. 3 und 10 ersichtlich, weist die Abdeckung 110 des Dosiergehäuses 102 bei dem gezeigten Ausführungsbeispiel eine Mehrzahl an in Axialrichtung der Dosierwalze 101 nebeneinander angeordneten Abdeckmodulen 111 auf, deren - in Axialrichtung der Dosierwalze 101 betrachtete - Breite im Wesentlichen der Breite einer jeweiligen Dosierklappe 120 sowie eines jeweiligen Dosierradsegmentes 106 der Dosierwalze 101 entspricht. Die Abdeckmodule 111 sind unter Bildung der Abdeckung 110 formschlüssig, z.B. mittels geeigneter Rasteinrichtungen, aneinander befestigt, wobei sie stattdessen selbstverständlich auch andersartig aneinander festgelegt, z.B. miteinander verschraubt sein können. Im Bereich ihres in den Fig. 3 und 10 oberen Endes weisen die Abdeckmodule 111 je eine sich etwa parallel zur Axialrichtung der Dosierwalze 110 erstreckende Durchgangsbohrung auf, welche eine Stange 112 aufnimmt, die zur schwenkbaren Befestigung der Abdeckung 110 zwischen einer zeichnerisch wiedergegebenen Abdeckposition und einer nach oben geklappten Öffnungsposition (nicht gezeigt) um eine Achse A an dem Dosiergehäuse 102 dient. Im Bereich ihres in den Fig. 3 und 10 unteren Endes weisen die Abdeckmodule 111 ferner je eine sich gleichfalls etwa parallel zur Axialrichtung der Dosierwalze 110 erstreckende weitere Durchgangsbohrung auf, welche eine weitere Stange 113 aufnimmt, die zur Arretierung der Abdeckung 110 in ihrer Abdeckposition mittels eines, insbesondere werkzeugfreien, Schnellverschlusses dient. Letzterer ist beispielsweise dadurch gebildet, indem die beidseits der Abdeckung 110 nach außen vorstehenden Enden der weiteren Stange 113 in im Wesentlichen U-förmige Aufnahmen 114 in den Stirnseiten des Dosiergehäuses 102 einführbar sind, wonach die U-förmigen Aufnahmen 114, z.B. mittels einer Griffschraube 115, eines Bolzens eines Stiftes oder dergleichen, verschließbar sind, um die weitere Stange 113 der Abdeckung 110 unverlierbar in den U-förmigen Aufnahmen 114 zurückzuhalten (vgl. insbesondere auch die Fig. 7 und 8).

Wie sich wiederum aus den Fig. 5 und 6 ergibt, können die Abdeckmodule 111 der Abdeckung 110 ferner mit je einer, mit einem jeweiligen Dosierradsegment 106 der Dosierwalze 101 zusammenwirkenden Reinigungseinrichtung 116 ausgestattet sein, welche im vorliegenden Fall in Form von in Richtung der Dosierwalze 101 vorstehenden Bürsten gebildet und in der zeichnerisch wiedergegebenen Abdeckposition der Abdeckung 110 - in Rotationsrichtung der Dosierwalze 101 betrachtet - stromab des Dosierauslasses 105 angeordnet ist, so dass mittels der Reinigungseinrichtungen 116 abgestreifte Verteilgutreste aus dem Dosierauslass 105 abgeführt werden können.

## Patentansprüche

1. Verteilmaschine zum Ausbringen von Verteilgut, insbesondere Dünger und/oder Saatgut, mit wenigstens einem Dosierorgan (100) mit einer in einem Dosiergehäuse (102) gelagerten, um eine Drehachse rotierbar angetriebenen Dosierwalze (101) zur Dosierung des Verteilgutes, wobei das Dosiergehäuse (102) einen Dosiereinlass (103) und einen - in Rotationsrichtung der Dosierwalze (101) betrachtet - stromab des Dosiereinlasses (103) angeordneten Dosierauslass (105) aufweist, **dadurch gekennzeichnet, dass** das Dosiergehäuse (102) zwischen seinem Dosiereinlass (103) und seinem Dosierauslass (105) eine Mehrzahl an in Axialrichtung der Dosierwalze (101) nebeneinander angeordneten Dosierklappen (120) mit einer zum Außenumfang der Dosierwalze (101) zumindest abschnittsweise komplementären Form aufweist, wobei die Dosierklappen (120) unabhängig voneinander um eine gemeinsame, parallel zur Drehachse der Dosierwalze (101) angeordnete Schwenkachse (S) zwischen einer Betriebsposition, in welcher sie mit der Dosierwalze (101) zusammenwirken, und einer Ausweichposition, in welcher sie mit Abstand von der Dosierwalze (101) angeordnet sind, verschwenkbar sind, wobei die Dosierklappen (120) in Richtung ihrer Betriebsposition mechanisch vorbelastet sind.

2. Verteilmaschine nach Anspruch 1, **dadurch gekennzeichnet, dass** einer jeweiligen Dosierklappe (120) zur mechanischen Vorbelastung derselben in ihre Betriebsposition wenigstens eine Feder (123), insbesondere in Form einer Schraubenfeder, zugeordnet ist.

3. Verteilmaschine nach Anspruch 1 oder 2, **dadurch gekennzeichnet, dass** die Dosierwalze (101) des Dosierorgans (100) eine Mehrzahl an Dosierradsegmenten (106) aufweist, welche unabhängig voneinander rotierbar angetrieben sind, wobei einem jeden Dosierradsegment (106) oder Gruppen von Dosierradsegmenten (106) je eine Dosierklappe (120) zugeordnet ist.

4. Verteilmaschine nach Anspruch 3, **dadurch gekennzeichnet, dass** die Dosierradsegmente (106) der Dosierwalze (101) auf einem sich koaxial zu deren Drehachse erstreckenden Hohlkörper (108) gelagert sind, in dessen Innern ein einem jeweiligen Dosierradsegment (106) zugeordneter Antrieb (107) angeordnet ist, wobei die Antriebe (107) ein einem jeweiligen Dosierradsegment (106) zugeordnetes Zahnrad (109) aufweisen und der Hohlkörper (108) zumindest an seinem einem jeweiligen Zahnrad (109) zugeordneten Axialabschnitt eine Durchgangsöffnung aufweist, wobei ein jeweiliges Zahnrad (109) eines jeweiligen Antriebs (107) mit einer jeweiligen Innenverzahnung eines jeweiligen Dosierradsegmentes (106) im Eingriff steht, wobei der die Dosierradsegmente (106) der Dosierwalze (101) lagernde Hohlkörper (108) insbesondere eine Zentriereinrichtung (108b) aufweist, welche mit einer hierzu komplementären Zentriereinrichtung (102a) des Dosiergehäuses (102) zusammenwirkt, um den Hohlkörper (108) in einer fest vorgegebenen Montageposition, in welcher die Durchgangsöffnungen des Hohlkörpers (108) im Wesentlichen nach unten weisen, selbstzentrierend an dem Dosiergehäuse (102) festzulegen.

5. Verteilmaschine nach einem der Ansprüche 1 bis 4, **dadurch gekennzeichnet, dass** die Dosierklappen (120) an ihren einander zugewandten Seiten Trennwände (121) aufweisen, welche eine zum Außenumfang der Dosierwalze (101) zumindest abschnittsweise komplementäre Form aufweisen und zur gegenseitigen Abdichtung der Dosierklappen (120) dienen.

6. Verteilmaschine nach einem der Ansprüche 1 bis 5, **dadurch gekennzeichnet, dass** zwischen den jeweiligen Dosierklappen (120) in Bezug auf die Dosierklappen (120) stationäre Zwischenwände (122) angeordnet sind, welche insbesondere eine den Trennwänden (121) der Dosierklappen (120) im Wesentlichen entsprechende Form aufweisen, wenn sich die Dosierklappen (120) in ihrer Betriebsposition befinden.

7. Verteilmaschine nach Anspruch 5 oder 6, **dadurch gekennzeichnet, dass** die Dosierwalze (101) eine Mehrzahl an Trennringen (101a) aufweist, welche unter einem der Breite einer jeweiligen Dosierklappe (120) im Wesentlichen entsprechenden axialen Abstand voneinander angeordnet sind und mit den Trennwänden (121) jeweils benachbarter Dosierklappen (120) und/oder gegebenenfalls mit den zwischen den jeweiligen Dosierklappen (120) angeordneten Zwischenwänden (122) zusammenwirken.

8. Verteilmaschine nach einem der Ansprüche 1 bis 7, **dadurch gekennzeichnet, dass** die Schwenkachse (S) der Dosierklappen (120) von einer an dem Dosiergehäuse (102) angeordneten Welle (112) gebildet ist, an welcher einerseits die Dosierklappen (120) schwenkbar gelagert sind und an welcher andererseits einer jeweiligen Dosierklappe (120) zugeordnete Widerlager (125) drehfest befestigt sind, welche zur mechanischen Vorbelastung einer jeweiligen Dosierklappe (120) in deren Betriebsposition dienen.

9. Verteilmaschine nach Anspruch 6 und 8, **dadurch gekennzeichnet, dass** die in Bezug auf die Dosierklappen (120) stationären Zwischenwände (122) drehfest an der die Schwenkachse (S) der Dosierklappen (120) bildenden Welle (124) befestigt sind.

10. Verteilmaschine nach Anspruch 8 oder 9, **dadurch gekennzeichnet, dass** die die Schwenkachse (S) der Dosierklappen (120) bildende Welle (124) drehbar an dem Dosiergehäuse (102) gelagert ist, wobei die Welle (124) zwischen einer Betriebsposition, in welcher die Dosierklappen (120) unter mechanischer Vorbelastung in Richtung ihrer Betriebsposition zwischen ihrer Betriebsposition und ihrer Ausweichposition verschwenkbar sind, und einer Restmengenentleer- und Wartungsposition, in welcher die Dosierklappen (120) von der Dosierwalze (101) fort verschwenkt sind, hin und her drehbar ist, wobei insbesondere ein mit der die Schwenkachse (S) der Dosierklappen (120) bildenden Welle (124) drehfest verbundener Hebel (129) vorgesehen ist, um die Welle (124) zwischen ihrer Betriebsposition und ihrer Restmengenentleer- und Wartungsposition hin und her zu drehen, wobei der Hebel (129) insbesondere an dem Dosiergehäuse (102) arretierbar ist, wenn sich die Welle (124) in ihrer Betriebsposition befindet.

11. Verteilmaschine nach einem der Ansprüche 1 bis 10, **dadurch gekennzeichnet, dass** das Dosiergehäuse (102) ferner eine Abdeckung (110) aufweist, welche - in Rotationsrichtung der Dosierwalze (101) betrachtet - stromab der Dosierklappen (120) angeordnet ist und sich zumindest über den Dosierauslass (105) des Dosiergehäuses (102) erstreckt, wobei die Abdeckung (110) insbesondere eine Mehrzahl an in Axialrichtung der Dosierwalze (101) nebeneinander angeordneten Abdeckmodulen (111) aufweist, deren Breite im Wesentlichen der Breite einer jeweiligen Dosierklappe (120) entspricht und welche insbesondere formschlüssig aneinander befestigbar sind.

12. Verteilmaschine nach Anspruch 11, **dadurch gekennzeichnet, dass** die Abdeckung (110) zwischen einer Abdeckposition und einer Öffnungsposition schwenkbar an dem Dosiergehäuse (102) gelagert ist, wobei die Abdeckung (110) insbesondere an einer an dem Dosiergehäuse (102) festgelegten Stange (112) schwenkbar gelagert ist.

13. Verteilmaschine nach Anspruch 12, **dadurch gekennzeichnet, dass** die Abdeckung (110) in ihrer Abdeckposition mittels eines Schnellverschlusses (113, 114, 115), insbesondere ohne Zuhilfenahme von Werkzeugen, an dem Dosiergehäuse (102) arretierbar ist.

14. Verteilmaschine nach einem der Ansprüche 11 bis 13, **dadurch gekennzeichnet, dass** die Abdeckung (110) eine mit der Dosierwalze (101) zusammenwirkende Reinigungseinrichtung (116), insbesondere in Form von Bürsten, aufweist, welche in der Abdeckposition der Abdeckung (110) - in Rotationsrichtung der Dosierwalze (101) betrachtet - im Bereich oder stromab des Dosierauslasses (105) angeordnet ist.

15. Dosierorgan (100) mit einer in einem Dosiergehäuse (102) gelagerten, um eine Drehachse rotierbar angetriebenen Dosierwalze (101), welches insbesondere für eine Verteilmaschine zum Ausbringen von Verteilgut nach einem der Ansprüche 1 bis 14 geeignet ist, wobei das Dosiergehäuse (102) einen Dosiereinlass (103) und einen - in Rotationsrichtung der Dosierwalze (101) betrachtet - stromab des Dosiereinlasses (103) angeordneten Dosierauslass (105) aufweist, **gekennzeichnet durch** die kennzeichnenden Merkmale des Anspruchs 1.

16. Dosierorgan nach Anspruch 15, **dadurch gekennzeichnet, dass** es die kennzeichnenden Merkmale wenigstens eines der Ansprüche 2 bis 14 aufweist.
